# EUROPÄISCHE PATENTSCHRIFT

(11) **EP 3 537 172 B1**
(45) Veröffentlichungstag und Bekanntmachung des Hinweises auf die Patenterteilung: **10.04.2024**
(21) Anmeldenummer: 19156476.4
(22) Anmeldetag: 11.02.2019
(51) Int. Cl.: G01S 7/4865, G01S 7/497, G01S 7/4861

(54) **EMPFANGSANORDNUNG ZUM EMPFANG VON LICHTSIGNALEN UND VERFAHREN ZUM EMPFANGEN VON LICHTSIGNALEN**
RECEIVING ARRANGEMENT FOR RECEIVING LIGHT SIGNALS AND METHOD FOR RECEIVING LIGHT SIGNALS
DISPOSITIF RÉCEPTEUR DESTINÉ À LA RÉCEPTION DES SIGNAUX LUMINEUX ET PROCÉDÉ DE RÉCEPTION DES SIGNAUX LUMINEUX

(30) Priorität: 08.03.2018 DE 102018203533
(43) Veröffentlichungstag der Anmeldung: 11.09.2019
(73) Patentinhaber: MicroVision, Inc., Redmond, WA 98052 (US)
(72) Erfinder: Beuschel, Ralf, 88239 Wangen (DE); Püskül, Özgür Nurettin, 22143 Hamburg (DE)
(74) Vertreter: RGTH

(56) Entgegenhaltungen:
- EP-A1- 3 091 271
- US-A1- 2017 052 065
- US-A1- 2017 115 381
- US-A1- 2018 017 672
- SCHULTZ STEVEN E ET AL: "Low-SWaP coincidence processing for Geiger-mode LIDAR video", VISUAL COMMUNICATIONS AND IMAGE PROCESSING; 20-1-2004 - 20-1-2004; SAN JOSE,, Bd. 9465, 19. Mai 2015 (2015-05-19), Seiten 94650F-94650F, XP060054775, DOI: 10.1117/12.2180991 ISBN: 978-1-62841-730-2
- MARKOVIC BOJAN ET AL: "Monolithic single-photon detectors and time-to-digital converters for picoseconds time-of-flight ranging", SENSORS, CAMERAS, AND SYSTEMS FOR INDUSTRIAL, SCIENTIFIC, AND CONSUMER APPLICATIONS XII, SPIE, 1000 20TH ST. BELLINGHAM WA 98225-6705 USA, Bd. 7875, Nr. 1, 10. Februar 2011 (2011-02-10), Seiten 1-6, XP060005640, DOI: 10.1117/12.872424 [gefunden am 2011-02-16]
- ROBERT A LAMB ET AL: "Pseudo-random single photon counting: Absolute rangefinding without alaising", ELECTRONICS, COMMUNICATIONS AND PHOTONICS CONFERENCE (SIECPC), 2011 SAUDI INTERNATIONAL, IEEE, 24. April 2011 (2011-04-24), Seiten 1-6, XP031993259, DOI: 10.1109/SIECPC.2011.5876950 ISBN: 978-1-4577-0068-2

## Beschreibung

Die Erfindung betrifft eine Empfangsanordnung zum Empfang von Lichtsignalen bzw. ein Verfahren zum Empfangen von Lichtsignalen nach der Gattung der unabhängigen Patentansprüche.

Aus WO 2017/081294 A1 sind eine Vorrichtung und ein Verfahren zur optischen Distanzmessung bekannt. Dabei wird eine Sendematrix zum Versenden von Messpulsen und eine Empfangsmatrix zum Empfangen der reflektieren Messpulse verwendet. Zum Versenden der Messpulse wird eine Untermenge der Sendematrix verwendet.

"Low-SWaP coincidence processing for Geiger-mode LIDAR video"; Schultz Steven et al offenbart einen Geiger-Modul LIDAR Detektor Array, der einen Laser verwendet um Lichtsignale auszusenden und eine GmAPD Kamera um die Lichtsignale zu empfangen und in elektrische Signale umzuwandeln.

In "Monolithic single-photon detectors and time-to-digital converters for picoseconds time-of-flight ranging"; Markovic et al wird eine zeitkorrelierte Photonenzählung, die Time-to-digital-Converter einsetzt, offenbart.

US 2017/052065 A1 offenbart eine Erfassungseinrichtung, die einen ersten Array von Sensorelementen aufweist.

EP 3 091 271 A1 betrifft einen Lichttaster nach dem Lichtlaufprinzip.

US 2017/115381 A1 offenbart ein Verfahren und eine Vorrichtung zum Bestimmen einer Entfernung zu einem Ziel.

In "Pseudo-random single photon counting: Absolute range finding without aliasing"; Robert Lamb et al wird eine zeitkorrelierte Einzelphotonenmessung beschrieben.

Die erfindungsgemäße Empfangsanordnung zum Empfang von Lichtsignalen bzw. das erfindungsgemäße Verfahren zum Empfangen von Lichtsignalen mit den Merkmalen der unabhängigen Patentansprüche haben demgegenüber den Vorteil, dass nunmehr die Entfernungsmessung mittels Lichtsignalen dadurch besser abgesichert wird, dass eine zeitkorrelierte Photonenzählung wenigstens zweimal durchgeführt wird. Durch diese Maßnahme wird insbesondere bei LiDAR-Anwendungen im Fahrzeugbereich eine hohe Datenintegrität in der Signalverarbeitung erreicht. Die bei der zeitkorrelierten Photonenzählung verwendete Bestimmung von Histogrammen und die weiteren Verarbeitungsschritte werden dadurch effektiv gegen Fehler geschützt. Es gibt verschiedene Fehlerszenarien, die insbesondere bei der Histogrammberechnung auftreten können. Bspw. können zufällig Speicherwerte durch Strahlung verändert werden. Es kann ein Lese- oder Schreibadressenfehler auftreten. Es kann ein Wert in seiner Höhe zufällig verändert werden. Solche Fehler werden durch die Erfindung in ihrer Auswirkung vermieden. Da bspw. bei LiDAR-Anwendung im Fahrzeug solche Umfeldinterpretationen dazu verwendet werden können, das Fahrzeug in seiner Bewegung zu beeinflussen, muss vorliegend eine hohe Zuverlässigkeit der Signalverarbeitung gewährleistet sein.

Bei der Empfangsanordnung handelt es sich vorliegend um eine Baugruppe, die den angegebenen Lichtempfänger und eine Auswerteschaltung aufweist. Dies kann als einstückiges Modul vorliegen, es kann jedoch auch sein, dass die Empfangsanordnung verteilt vorliegt, also nicht als eine einzige Baugruppe. Empfangen werden die Lichtsignale, die üblicherweise vorher mit einer vorliegenden Sendeeinrichtung versendet wurden. Insbesondere zur Entfernungsmessung hat sich die LiDAR-Technik als geeignet erwiesen. Dabei ist für die Umfeldinterpretation von Fahrzeugen eine Erfassung der Umgebung durch solche Lasersignale möglich. Diese Lasersignale werden durch Halbleiterlaser üblicherweise sogar Laserarrays also Feldern von solchen Lasern erzeugt. Dafür werden die aus dem Stand der Technik bekannten VCSEL verwendet. Diese sind in Halbleitertechnik in zuverlässiger und einfacher Art und Weise herzustellen. Üblicherweise werden für LiDAR-Anwendungen Wellenlängen im Infrarotbereich verwendet. Es können jedoch auch Wellenlängen im sichtbaren Bereich verwendet werden.

Als Lichtsignale werden vorzugsweise Laserimpulse verwendet, die vorzugsweise innerhalb einer Zeitperiode von zwei Mikrosekunden versendet werden, d.h. pro Periode wird ein Impulspaket mit einer Breite von bspw. 5ns versendet. Diese zwei Mikrosekunden entsprechen einer einfachen Entfernung um das Fahrzeug von 300 Metern. Die Entfernungsbestimmung erfolgt üblicherweise durch die sogenannte Time-of-flight-Methode, d.h. es wird die Zeit gemessen, die das Licht braucht, um vom Sender ausgestrahlt zu werden und beim Empfänger anzukommen. Dazu verwendet der Empfänger ein Startsignal, das die Lichtemission der Lichtsignale signalisiert, und die empfangenen Lichtsignale. Aus der Zeitdifferenz zwischen dem Startsignal und der Empfangszeit für die empfangenen Lichtsignale oder Lichtimpulse kann der Empfänger die Entfernung der Objekte bestimmen. Das Startsignal wird vom Sender eleltrisch und/oder optisch an den Empfänger übertragen.

Als Lichtempfänger wird üblicherweise ein Feld von sogenannten Single-Photon-Avalanche-Diodes (SPAD) verwendet. Diese Dioden werden unter großer hoher Sperrspannung, die über der Durchbruchsspannung liegt, betrieben im sogenannten Geiger-Modus, sodass bereits im Prinzip ein Photon genügt, um den Lawinenprozess auszulösen. Da jedoch Streulicht vorliegt, wird es eine gewisse Rauschwelle geben, ab der der Lawineneffekt erst zum Tragen kommt. Es sind jedoch auch andere Lichtempfänger vorliegend möglich.

Die Funktion des Lichtempfängers ist, das optische Signal in ein elektrisches Signal zu wandeln. Dies gelingt durch den lichtelektrischen Effekt.

Der Lichtempfänger ist weiterhin an eine Auswerteschaltung angeschlossen, die aus den elektrischen Signalen mittels einer zeitkorrelierten Photonenzählung, die die elektrischen Signale zu Zeiten zuordnet, eine Entfernung zwischen der Empfangsanordnung und dem wenigstens einen Objekt, an dem die Lichtsignale reflektiert werden, bestimmt. Hierzu verwendet die Auswerteschaltung auch das Startsignal vom Sender, das die Emission der Lichtsignale oder Lichtimpulse anzeigt. Dieses Startsignal kann bspw. von einem Pulsgenerator oder Lasertreiber des Senders stammen.

Die Auswerteschaltung kann eine integrierte Schaltung sein, wobei die Funktionen hardware- und/oder softwaremäßig ausgeführt werden. Es ist möglich, dass eine Mehrzahl von integrierten Schaltungen vorliegt aber auch diskrete Bauelemente oder Kombinationen aus diesen Bausteinen.

Die zeitkorrelierte Photonenzählung ist vorliegend die Methode, um die Flugzeit zu bestimmen. Dabei wird aus dem elektrischen Signal, das die Photonen erzeugt haben, eine Zeit bestimmt und diese Zeit wird in ein Histogramm eingetragen. Durch eine Maximumsuche wird dann diese Zeit nach vielen Messungen gesucht, die die meisten Treffer hat. Es wird dann angenommen, dass der Lichtimpuls für diese Zeit vom Sender bis zum Empfänger gebraucht hat und daraus kann dann zwanglos die Entfernung bestimmt werden. Hierzu wird wie oben beschrieben auch das Startsignal verwendet.

Bei der zeitkorrelierten Photonenzählung werden einzelne empfangene Photonen der ausgesendeten Lichtimpulse detektiert und gezählt und in ein Histogramm eingetragen und zwar an welcher Stelle, in zeitlicher Hinsicht gesehen, das oder die Photonen auftreten bezogen auf das Aussenden der Lichtimpulse. Das Aussenden des Lichtimpulses und die Zählung werden viele Male wiederholt. Dadurch gelingt eine sehr genaue Zeitmessung des Laserimpulses. Bspw. wird ein Objekt von einer Sendeeinrichtung mit vielen Photonen getroffen, die dann durch die Empfängeranordnung empfangen werden. Durch das häufige Wiederholen dieser Photonenbestimmung ist es möglich, den Lichtimpuls bzgl. seiner Flugzeit genau zu bestimmen. Vorliegend liefern die SPADs (Single Photon Avalanche Diodes) in der Empängeranordnung jeweils einen binären Impuls bei der Detektion eines Photons. Die Zeitpunkte der Impulse werden mit Zeit-Digital-Wandlern ermittelt und dann in das Histogramm eingetragen. So wird vorliegend die zeitkorrelierte Photonenzählung realisiert.

Erfindungsgemäß wird nunmehr die zeitkorrelierte Photonenzählung wenigstens zweimal durchgeführt. Diese erfolgt parallel. Es sollen die Ausgangssignale derselben Empfängerelemente bspw. einer SPAD von bspw. zwei Auswerteschaltungen ausgewertet werden. Diese Auswerteschaltungen unterscheiden sich in der Genauigkeit. Damit sollen insbesondere zufällige Fehler erfasst werden und aus dem Auswerteprozess eliminiert werden, sodass mit der Auswertung des LiDAR-Signals keine falschen Steuersignale in einem Fahrzeug oder einer anderen Anwendung, für die das LiDAR verwendet wird, bestimmt werden.

Die elektrischen Signale sind insbesondere Digitalsignale, wobei der Lichtempfänger ein analoges Signal ausgibt, aus dem dann ein Digitalsignal oder zumindest ein Impuls erzeugt wird.

Das Objekt an dem die Lichtsignale reflektiert werden ist ein Objekt, das von der Sendeeinrichtung durch die Lichtsignale bestrahlt wird und dessen Reflexion bei der Empfangsanordnung ankommen. Dabei kann es sich im Verkehr bspw. um ein anderes Auto, einen Fußgänger oder ein feststehendes Objekt handeln.

Erfindungsgemäß wird die zeitkorrelierte Photonenzählung wenigstens zweimal durchgeführt, wobei für jede zeitkorrelierte Photonenzählung eine jeweilige Zeit-Digital-Wandlung vorgesehen ist, und wobei die Zeit-Digital-Wandlung für die wenigstens eine zweite Photonenzählung einen Zähler aufweist. Die erste und die wenigstens eine zweite zeitkorrelierte Photonenzählung werden auf getrennten Auswertepfaden in der Auswerteschaltung bestimmt, und der Zähler ist in einem zweiten Auswertepfad mit einem Baustein zur Phasenverschiebung verbunden, der einen Referenztakt, mit dem der Zähler versorgt wird, in Abhängigkeit vom Startsignal, das von einer Sendeschaltung empfangen wird, verzögert. Es ist möglich die zeitkorrelierte Photonenzählung mehr als zweimal durchzuführen, um eine größere Absicherung des Ergebnisses zu erreichen als wenn es nur zweimal durchgeführt worden wäre.

Erfindungsgemäß führt die Auswerteschaltung die wenigstens eine zweite zeitkorrelierte Photonenzählung mit einer niedrigeren zeitlichen Auflösung als die erste zeitkorrelierte Photonenzählung aus. Da es sich hier um Absicherungszwecke handelt, kann eine niedrigere Auflösung verwendet werden. Dies spart Ressourcen und Verarbeitungszeit.

Weiterhin ist von Vorteil, dass die erste zeitkorrelierte Photonenzählung eine viermal, achtmal oder sechzehnmal höhere Auflösung aufweist als die wenigstens eine zweite zeitkorrelierte Photonenzählung. D. h. es ist möglich, bis auf ein Viertel, Achtel oder Sechzehntel der Auflösung herunterzugehen, um die zweite zeitkorrelierte Photonenzählung zur Absicherung durchzuführen. Damit sind entsprechende Einsparungen möglich.

Erfindungsgemäß ist für die erste und die wenigstens eine weitere zeitkorrelierte Photonenzählung eine jeweilige Zeit-Digital-Wandlung vorgesehen. Dies bedeutet, dass zwei getrennte Hardwarepfade für die erste und die weitere zeitkorrelierte Photonenzählungen vorliegen. Dies ermöglicht eine gute Absicherung des Ergebnisses, denn es ist dann unwahrscheinlicher, dass beide Hardwarepfade gleichzeitig durch eine Fehlerquelle beeinflusst werden. Alternativ ist es jedoch möglich, dass die Zeit-Digital-Wandlung rein softwaremäßig durchgeführt wird und dass zwei verschiedene Softwareprogramme vorliegen, die jeweils die Zeit-Digital-Wandlung durchführen. Dies kann auch auf der gleichen Hardware durchgeführt werden. Das gleiche Programm kann die die Zeit-Digital-Wandlung alternativ auch nacheinander ausführen. Damit wird dann durch die unterschiedlichen Zeiten der Ausführung der Zeit-Digital-Wandlung eine Trennung durchgeführt, um die oben genannten Fehlerquellen auszuschalten.

Erfindungsgemäß weist die Zeit-Digital-Wandlung für die wenigstens eine zweite zeitkorrelierte Photonenzählung einen Zähler auf. Dies stellt eine einfachere Variante einer Zeit-Digital-Wandlung dar als bspw. die Ausprägung, die im Folgenden dargestellt wird.

Eine Zeit-Digital-Wandlung ist ein Verfahren, um eine Zeit beispielsweise zwischen zwei Impulsen zu bestimmen und in ein Digitalwort umzusetzen. Dazu kann bspw. ein Zähler verwendet werden, der durch ein Start- und ein Stoppsignal bspw. des empfangenen Lichtimpulses bzw. des ausgesendeten Lichtimpulses aktiviert wird. Um den Fehler zu Beginn und zu Ende des durch den Zähler ermittelten Zählerstandes zu bestimmen, wird eine sogenannte Interpolation verwendet. Dazu kann eine Verzögerungsschaltung verwendet werden. Es ist jedoch auch möglich, zwei zueinander verstimmte Oszillatoren zu verwenden oder eine sogenannte Überabtastung bspw. eine Vierfach-Überabtastung zu verwenden und damit das Signal abzutasten. Durch den Zählerstand und die Werte, die aus der Interpolation gewonnen werden zu Beginn der Zählung und zu Ende der Zählung, kann dann die Zeit und damit die Flugzeit genau gemessen werden.

Der Vorteil dieser Methode besteht in der hohen zeitlichen Auflösung von ca. 100 ps. Dies entspricht einer Abtastrate von 10 GHz oder einer Distanzmessgenauigkeit von 1,4 cm.

Weiterhin ist es vorteilhaft, dass eine Plausibilisierungseinheit vorgesehen ist, die anhand von Daten der ersten und wenigstens einen zweiten zeitkorrelierten Photonenzählung ein Plausibilisierungssignal ausgibt. Dies ermöglicht eine zusätzliche Absicherung, ob die zeitkorrelierten Photonenzählungen plausible Werte ausgeben. Dies kann bspw. dadurch realisiert werden, dass die Summen von vier oder acht benachbarten Histogrammeinträgen der ersten und der zweiten Photonenzählung gleich sind oder zumindest einen erlaubten Unterschied aufweisen.

Darüber hinaus ist von Vorteil, dass die Daten für diese Plausibilisierung eine Anzahl von Zählungen in einem bestimmten Zeitabschnitt sind oder eine Objektdetektion. Über die Zahl der Zählungen kann eine Plausibilisierung der beiden Messungen in dem Histogramm mit der hohen und mit der niedrigen Auflösung durchgeführt werden. Aber auch mit der Objektdetektion, d.h. der Entfernungsbestimmung oder andere Objektparameter kann eine solche Plausibilisierung der beiden Histogramme erfolgen.

Erfindungsgemäß werden die erste und wenigstens eine zweite zeitkorrelierte Photonenzählung auf getrennten Auswertepfaden in der Auswerteschaltung bestimmt. Dies gibt explizit an, dass die zeitkorrelierten Photonenzählungen auf getrennten Auswertepfaden ausgeführt werden und damit eine hohe Absicherung hinsichtlich des Ergebnisses besteht.

Gemäß der Erfindung ist der Zähler im zweiten Auswertepfad mit einem Baustein zur Phasenverschiebung verbunden, der einen Referenztakt, mit dem der Zähler versorgt wird, in Abhängigkeit vom Startsignal, das von einer Sendeschaltung empfangen wird, verzögert wird. Damit wird die zweite zeitkorrelierte Photonenzählung auf das Startsignal der Sendeschaltung eingestellt und mit dem gleichen Phasenverzug im Vergleich zum Referenztakt versehen. Dies ermöglicht eine bessere Signalverarbeitung.

Ausführungsbeispiele der Erfindung sind in der Zeichnung dargestellt und werden in der nachfolgenden Beschreibung näher erläutert.

Es zeigen:
Fig. 1 ein Fahrzeug und ein Objekt,
Fig. 2 ein Blockschaltbild der erfindungsgemäßen Empfangsanordnung,
Fig. 3 ein Blockschaltbild einer Empfangsanordnung nach dem Stand der Technik zur Erleichterung des Verständnis der Erfindung,
Fig. 4 eine Schaltung der erfindungsgemäßen Empfangsanordnung,
Fig. 5 ein Teilschaltbild einer Empfangsanordnung nach dem Stand der Technik zur Erleichterung des Verständnis der Erfindung und
Fig. 6 ein Flussdiagramm des grundlegenden Verfahrens.

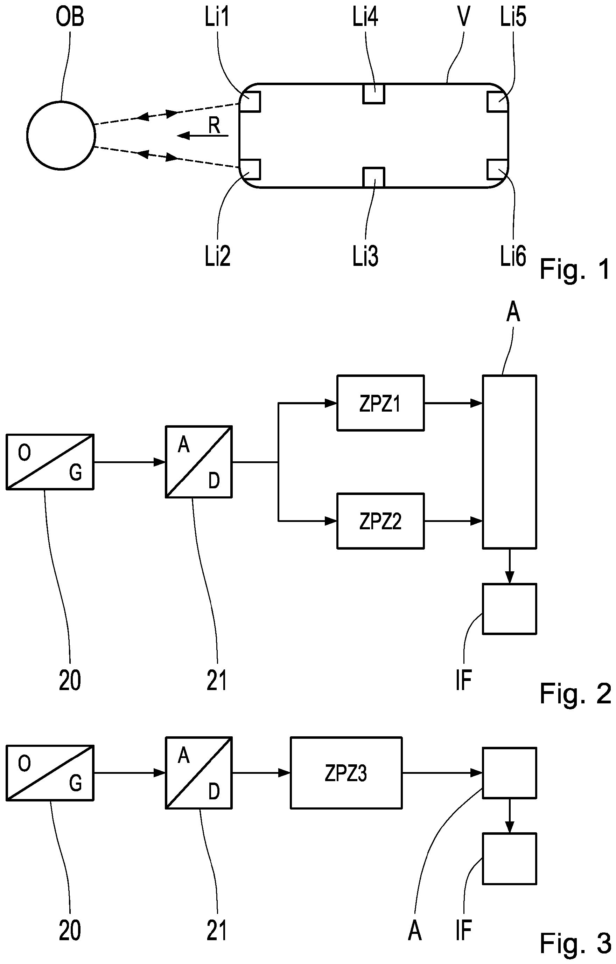

Fig. 1 zeigt ein Fahrzeug V, das sich in die Richtung R bewegt. Das Fahrzeug V weist die LiDAR-Module Li1 bis Li6 auf. Bei einem LiDAR-Modul handelt es sich um eine Sendeeinrichtung zur Versendung von Lichtsignalen und der erfindungsgemäßen Empfangsanordnung zum Empfang von den dann reflektierten Lichtsignalen. Diese LiDAR-Module erfassen die Umgebung des Fahrzeugs V. Es können mehr oder weniger LiDAR-Module verwendet werden und auch an weiteren Stellen des Fahrzeugs V. Daher wird das Objekt OB durch das LiDAR-Modul Li1 erfasst. Durch eine Entfernungsbestimmung und entsprechende Charakterisierung anhand der Bewegungsparameter des Objekts ist es möglich, auf eine mögliche Kollision zu schließen und entsprechende Bewegungen des Fahrzeugs V zu beeinflussen, um nicht mit dem Objekt OB zu kollidieren.

Die LiDAR-Module Li1 bis Li6 weisen eine erfindungsgemäße Empfängeranordnung auf und eine Sendereinrichtung, die wie oben beschrieben mit einem Laserarray die Laserimpulse versendet, um die am Objekt OB reflektierten Laserimpulse dann mit einem SPAD-Array zu empfangen und dann entsprechend mit der zeitkorrelierten Photonenzählung auszuwerten, um die Entfernung zwischen dem Objekt OB und dem Fahrzeug V zu bestimmen. Dafür wird die Time-of-Flight-Methode verwendet.

Fig. 2 zeigt in einem Blockschaltbild die erfindungsgemäße Empfangsanordnung. Ein Wandler 20 wandelt das optische Signal also das Lichtsignal in ein elektrisches Signal. Dieses elektrische Signal wird an eine Analog-Digital-Wandlung 21 weitergegeben. Die Analog-Digital-Wandlung kann eine Einrichtung sein, die aus dem Signal des Wandlers 20, vorzugsweise eine SPAD, ein Digitalsignal erzeugt, was auch als Ereignissignal oder Event bezeichnet werden kann. Es kann jedoch auch lediglich eine Impulsbildung oder Impulsverlängerung vorgesehen sein.

Das so umgeformte elektrische Signal, das auch noch weitere Verarbeitungsschritte durchlaufen kann, wird dann auf zwei getrennte Hardwarepfade gegeben, indem im ersten Hardwarepfad oder Auswertepfad eine erste zeitkorrelierte Photonenzählung ZPZ1 und im zweiten Auswertepfad eine zweite zeitkorrelierte Photonenzählung ZPZ2 ausgeführt werden. Diese Signale werden an einen Auswertebaustein A weitergegeben, indem dann mit diesen Signalen die beiden Histogramme einmal eines mit höherer Auflösung und zum anderen eines mit niedriger Auflösung oder sogar mit gleicher Auflösung gefüllt werden. Durch eine Maximumsuche nach vielen Zählungen und dem Füllen dieser Histogramme wird dann die Entfernung in den beiden Histogrammen von der Empfangsschaltung zum Objekt bestimmt und diese Ergebnisse werden miteinander abgeglichen, ob vorliegend ein plausibles Signal vorliegt. Für die Entfernungsbestimmung wird wie oben angegeben ein Startsignal für die Emission der Laserimpulse verwendet, das vom Sender an die Empfangsanordnung übergeben wird.

Dann wird das Entfernungssignal oder eine Ableitung davon über den Schnittstellenbaustein IF an weitere Verarbeitungseinheiten abgegeben, um bspw. Fahrzeugfunktionen auszurechnen.

Fig. 3 zeigt ein Blockschaltbild einer Empfangsanordnung nach dem Stand der Technik. Wiederum wird im Block 20 aus den Lichtsignalen ein elektrisches Signal erzeugt. Dies wird dann im Block 21 wiederum in ein digitales Signal umgewandelt. Im Block ZPZ3 erfolgt die zeitkorrelierte Photonenzählung. Diese wird vorliegend zweimal durchgeführt und die entsprechenden Signale werden dann sukzessive an den Auswertebaustein A weitergegeben, der wiederum die beiden Histogramme füllt. In analoger Weise wird über Schnittstellenbaustein IF die Entfernungsbestimmung oder ein abgeleitetes Signal davon weitergegeben. Bei der zeitkorrelierten Photonenzählung wird das Aussenden des Laserimpulses vielfach wiederholt. Vor Beginn der wiederholten Messung werden alle Speicherstellen im jeweiligen Histogramm mit bspw. hoher und niedriger Auflösung auf Null gesetzt.

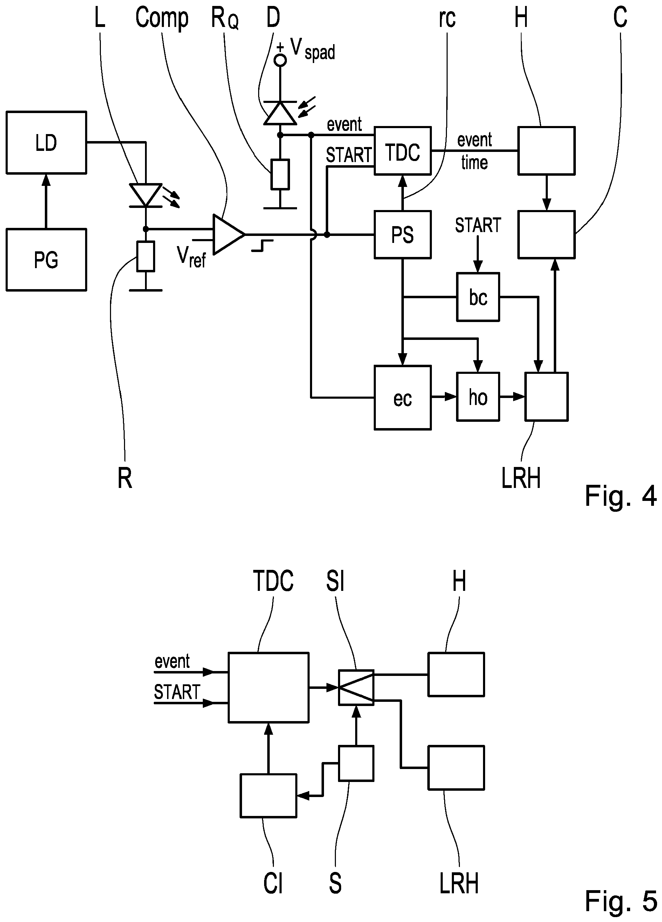

Fig. 4 zeigt ein Schaltbild der erfindungsgemäßen Empfangsanordnung in Verbindung mit einer Sendeeinrichtung. Die Sendeeinrichtung weist einen Pulsgenerator PG auf, der einen Lasertreiber LD mit einem entsprechenden Signal versorgt, um einen Laserimpuls zu gegebenen Zeiten auszugeben über den Haltleiterlaser L, der in einem Array vorliegt, in dem viele solcher Laserdioden angeordnet sind. Die Laserdiode L ist über einen Widerstand R mit Masse verbunden. Zwischen der Laserdiode L und dem Widerstand R wird das Ausgangssignal der Laserdiode als Spannung an den Komparator Comp ausgegeben und mit der Referenzspannung V_{ref} verglichen. In Abhängigkeit davon wird ein Impuls als Startsignal an die Empfangsanordnung ausgegeben.

Dieses Startsignal geht an die Zeit-Digital-Wandlung TDC und an einen Phasenshifter PS. Die Lichtsignale werden vorliegend mit der Diode D empfangen, die für ein ganzes Diodenarray steht. Es handelt sich vorliegend, wie oben ausgeführt, um eine SPAD. Diese ist unter der Vorspannung V_{spad}. Die Diode D wird über den Quench-Widerstand gegen Masse geschaltet. Über den Quenchwiderstand RQ erfolgt das sogenannte Quenching: Der Lawineneffekt wird gedrosselt und letztlich gestoppt, vorliegend durch den Widerstand RQ. Auch dies geschieht in einer Zeit, die sehr viel kleiner als 1 ns ist. Dieses Quenchen ist notwendig, um die Selbstzerstörung der Photodiode zu verhindern. Das Quenchen mit einem Widerstand, was am häufigsten verwendet wird, wird als passives Quenchen bezeichnet. Es gibt noch kompliziertere Ausgestaltungen, die dann entsprechend genannt werden.

Das Signal event geht zwischen der Photodiode D und dem Quench-Widerstand R_{Q} in den Block TDC, der die Zeit-Digital-Wandlung ausführt. In diesen Block geht auch das Startsignal von der Sendeeinrichtung. Weiterhin wird die Zeit-Digital-Wandlung TDC von dem Block PS mit dem Takt RC versorgt. Dieser Takt wird vom Block RPS auch an den zur TDC parallelen Auswertepfad beginnend mit dem Event Counter EC gesendet. Auch in den Event Counter EC geht das Signal event. Damit kann das Signal von der SPAD sowohl von der Zeit-Digital-Wandlung als auch vom Event Counter parallel verarbeitet werden. Die Zeit-Digital-Wandlung TDC gibt die Eventtime, also die Zeit zu der das Photon oder die Photonen durch die Diode D empfangen wurden, an das Histogramm H aus. Dort wird im Histogramm die entsprechende Zeit eingetragen, d.h. in dem Histogramm wird der Wert der Speicherstelle um eins erhöht, der der Laufzeit seit Aussenden des Laserimpulses entspricht. Die Zeit-Digital-Wandlung TDC verwendet bspw. einen 500MHz Referenztakt und erzeugt intern bspw. über eine Verzögerungsschaltung eine hohe zeitliche Auflösung von bspw. 250ps.

Der Event Counter, der vom Phaseshifter PS den Takt entsprechend dem Startsignal vom Sender phasenverschoben erhält, gibt ein Signal an das Halteglied ho aus. Über den Phasenshifter PS kann der Event Counter in der 500MHz Basis in der Phasenlage an den Startimpuls (=Startsignal) angglichen werden, der auch als Referenz für den Start der Zeit-Digitalwandlung TDC herangezogen wird. Dadurch ist es möglich, die Zeitbereiche der Event-Aggregation mehrerer Speicherstellen des 250ps-Histogramms zu synchronisieren.

Der Event Counter kann mehrere Ereignisse, die in einem 500MHz-lntervall auftreten, asynchron zählen. Mit jedem Taktzyklus wird der aktuelle Zählerstand in einem Halteglied zwischengespeichert und nachfolgend zu dem Wert der entsprechenden Speicherstelle addiert. Das Signal ho des Halteglieds wird in ein weiteres Histogramm LRH eingetragen, das eine niedrigere Auflösung als das Histogramm H aufweist. Die Speicherstelle dieses Histogramms LRH wird auch noch von dem sogenannten Bin Counter bc ausgewählt. Der Bin Counter bc wird durch das Signal Start ebenfalls resetiert. Sowohl das Histogramm H als auch das Histogramm LRH geben ihr Signal an einen Block C aus, der diese Signale vergleicht. Aufgrund von Signalabweichungen kann dieser Block C kleine Unterschiede in den Histogrammen erlauben.

Der Zähler EC kann in bestimmten Konstellationen auch als 1-bit Zähler ausgeführt werden. Eine einzelne SPAD Zelle hat in der Regel eine Totzeit von 10 bis 20 ns. Daher kann in einem 2ns Intervall (500MHz Takt) nur ein einziger Event auftreten.

Es ist aber auch möglich, mehrere SPAD-Zellen parallel über eine Kombinationslogik an einer Zeitmesseinheit anzuschließen. In diesem Fall können in einem 2ns Referenztaktzyklus mehrere SPAD Auslösungen auftreten, und es wird ein Zähler mit entsprechend mehr Wortbreite benötigt.

Schließlich kann der Referenztakt auch deutlich niedriger als 500 MHz gewählt werden, wodurch ebenfalls mehr Events pro Zeitintervall auftreten können.

Fig. 5 zeigt ein Teilschaltbild einer Empfangsschaltung nach dem Stand der Technik. Vorliegend ist nun kein zweiter Auswertepfad mehr vorhanden, sondern nur eine einzige Zeit-Digital-Wandlung TDC, die dann einer gesonderten Prüfung unterzogen werden muss. In die Zeit-Digital-Wandlung gehen die Signale event von den Photodioden und Signal Start von der Sendeeinrichtung ein. Daraus wird wieder entsprechend die Zeit ermittelt, mit der die Photonen in der Empfangseinrichtung nach ihrem Versenden angekommen sind. Diese Zeit wird entweder, je nachdem mit welcher Auflösung die Zeit-Digital-Wandlung TDC arbeitet, an das Histogramm H oder an das Histogramm LRH ausgegeben. In das Histogramm H wird erst mit hoher Auflösung also bspw. der achtfachen Auflösung eingetragen und in das Histogramm LRH mit der entsprechend niedrigeren. Dies nimmt eine Schalteinrichtung S vor, die einen Schalter SL entsprechend ansteuert. Diese Steuerung S steuert auch einen Taktgeber CL an, der in der Lage ist, die Zeit-Digital-Wandlung vom Takt herunterzunehmen, um so die Auflösung zu reduzieren. Es sind auch andere Möglichkeiten denkbar, um den Takt zu reduzieren und damit die Auflösung.

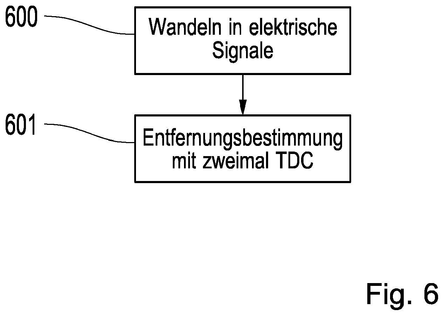

Fig. 6 zeigt in einem Flussdiagramm das grundlegende Verfahren. In Verfahrensschritt 600 wandeln die Photodioden D die empfangenen Lichtsignale in elektrische Signale. In Verfahrensschritt 601 werden diese elektrischen Signale dazu verwendet, eine Enfernungsbestimmung durchzuführen, in dem eine zeitkorrelierte Photonenzählung durchgeführt wird. Dabei wird eine Zeit-Digital-Wandlung verwendet, die nun zweimal durchgeführt wird, um zufällige Fehlerquellen zu eliminieren.

### Bezugszeichen

- OB: Objekt
- V: Fahrzeug
- R: Richtung
- Li1-8: LiDAR-Module
- 20: Wandler von Lichtsignalen in elektrische Signale
- 21: Analog-Digital-Wandlung
- ZPZ1: erste zeitkorrelierte Photonenzählung
- ZPZ2: zweite zeitkorrelierte Photonenzählung
- A: Auswertebaustein
- IF: Schnittstellenbaustein
- ZPZ3: zeitkorrelierte Photonenzählung
- PG: Pulsgenerator
- LD: Lasertreiber
- L: Laserdiode
- R: Widerstand
- Comp: Komparator
- Vref: Referenzspannung
- Vspad: Sperrspannung für SPAD
- D: Lichtempfänger, SPAD
- Rq: Quenchwiderstand
- TDC: Zeit-Digital-Wandlung
- PS: Phasenshifter
- ec: Zähler
- ho: Halteglied
- bc: Bin-Zähler
- LRH: Histogramm mit niedriger Auflösung
- H: Histogramm mit hoher Auflösung
- C: Vergleicher
- Cl: Taktgeber
- Sl: Schalter
- S: Schalteinrichtung
- 600: Verfahrensschritt
- 601: Verfahrensschritt

## Patentansprüche

1. Empfangsanordnung zum Empfang von Lichtsignalen mit:
- einem Lichtempfänger (D), der die Lichtsignale in elektrische Signale wandelt,
- einer Auswerteschaltung, die aus den elektrischen Signalen mittels einer zeitkorrelierten Photonenzählung (ZPZ3), die die elektrischen Signale zu Zeiten zuordnet, und einem Startsignal für eine Emission der Lichtsignale eine Entfernung zwischen der Empfangsanordnung und wenigstens einem Objekt (OB) bestimmt, wobei die zeitkorrelierte Photonenzählung (ZPZ3) wenigstens zweimal durchgeführt wird,
wobei für jede zeitkorrelierte Photonenzählung (ZPZ3) eine jeweilige Zeit-Digital-Wandlung (TDC) vorgesehen ist,
wobei die Zeit-Digital-Wandlung (TDC) für die wenigstens eine zweite Photonenzählung (ZPZ2) einen Zähler (ec) aufweist,
wobei die erste und die wenigstens eine zweite zeitkorrelierte Photonenzählung (ZPZ2) auf getrennten Auswertepfaden in der Auswerteschaltung bestimmt werden, und
wobei der Zähler (ec) in einem zweiten Auswertepfad mit einem Baustein zur Phasenverschiebung verbunden ist, der einen Referenztakt, mit dem der Zähler (ec) versorgt wird, in Abhängigkeit vom Startsignal, das von einer Sendeschaltung empfangen wird, verzögert,
**dadurch gekennzeichnet, dass**
die Auswerteschaltung die wenigstens eine zweite zeitkorrelierte Photonenzählung (ZPZ2) mit einer niedrigeren zeitlichen Auflösung als die erste zeitkorrelierte Photonenzählung (ZPZ1) ausführt.

2. Empfangsanordnung nach Anspruch 1, **dadurch gekennzeichnet, dass** die erste zeitkorrelierte Photonenzählung (ZPZ1) eine viermal, achtmal oder sechzehnmal höhere Auflösung aufweist als die wenigstens eine zweite zeitkorrelierte Photonenzählung (ZPZ2).

3. Empfangsanordnung nach einem der vorhergehenden Ansprüche, **dadurch gekennzeichnet, dass** eine Plausibilisierungseinheit vorgesehen ist, die anhand von Daten der ersten und wenigstens einen zweiten zeitkorrelierten Photonenzählung (ZPZ2) ein Plausibilisierungssignal ausgibt.

4. Empfangsanordnung nach Anspruch 3, **dadurch gekennzeichnet, dass** die Daten eine Anzahl von Zählungen in einem bestimmten Zeitabschnitt sind oder eine Objektdetektion.

5. Verfahren zum Empfangen von Lichtsignalen mit folgenden Verfahrensschritten:
- Wandeln der empfangenen Lichtsignale in elektrische Signale
- Bestimmen einer Entfernung zwischen einer Empfangsanordnung und einem Objekt (OB) mittels einer zeitkorrelierten Photonenzählung (ZPZ3) , die die elektrischen Signale zu Zeiten zuordnet, und einem Startsignal für eine Emission der Lichtsignale, wobei die zeitkorrelierte Photonenzählung (ZPZ3) wenigstens zweimal durchgeführt wird,
wobei für jede zeitkorrelierte Photonenzählung (ZPZ3) eine jeweilige Zeit-Digital-Wandlung (TDC) vorgesehen ist,
wobei die Zeit-Digital-Wandlung (TDC) für die wenigstens eine zweite Photonenzählung (ZPZ2) einen Zähler (ec) aufweist,
wobei die erste und die wenigstens eine zweite zeitkorrelierte Photonenzählung (ZPZ2) auf getrennten Auswertepfaden in der Auswerteschaltung bestimmt werden, und
wobei der Zähler (ec) in einem zweiten Auswertepfad mit einem Baustein zur Phasenverschiebung verbunden ist, der einen Referenztakt, mit dem der Zähler (ec) versorgt wird, in Abhängigkeit vom Startsignal, das von einer Sendeschaltung empfangen wird, verzögert,
**dadurch gekennzeichnet, dass**
die Auswerteschaltung die wenigstens eine zweite zeitkorrelierte Photonenzählung (ZPZ2) mit einer niedrigeren zeitlichen Auflösung als die erste zeitkorrelierte Photonenzählung (ZPZ1) ausführt.

## Claims

1. Receiving arrangement for receiving light signals with:
- a light receiver (D), which converts the light signals into electrical signals,
- an evaluation circuit which determines a distance between the receiving arrangement and at least one object (OB) from the electrical signals by means of time-correlated photon counting (ZPZ3), which assigns the electrical signals to times, and a start signal for an emission of the light signals, wherein the time-correlated photon counting (ZPZ3) is carried out at least twice,
wherein
a respective time-to-digital conversion (TDC) is provided for each time-correlated photon count (ZPZ3),
wherein the time-to-digital conversion (TDC) has a counter (ec) for the at least one second photon count (ZPZ2),
wherein the first and the at least one second time-correlated photon count (ZPZ2) are determined on separate evaluation paths in the evaluation circuit, and
wherein the counter (ec) is connected in a second evaluation path to a component for phase shifting, which delays a reference clock, with which the counter (ec) is supplied, depending in the start signal received from a transmitter circuit,
**characterized in that**
the evaluation circuit performs the at least one second time-correlated photon count (ZPZ2) with a lower temporal resolution than the first time-correlated photon count (ZPZ1).

2. Receiving arrangement according to claim 1, **characterized in that** the first time-correlated photon count (ZPZ1) has a resolution which is four times, eight times or sixteen times higher than that of the at least one second time-correlated photon count (ZPZ2).

3. Receiving arrangement according to one of the preceding claims, **characterized in that** a plausibility unit is provided which outputs a plausibility signal on the basis of data from the first and at least one second time-correlated photon count (ZPZ2).

4. Receiving arrangement according to claim 3, **characterized in that** the data is a number of counts in a certain time interval or an object detection.

5. Method for receiving light signals with the following method steps:
- Converting the received light signals into electrical signals
- Determining a distance between a receiving arrangement and an object (OB) by means of a time-correlated photon counting (ZPZ3), which assigns the electrical signals to times, and a start signal for an emission of the light signals, wherein the time-correlated photon counting (ZPZ3) is carried out at least twice,
wherein a respective time-to-digital conversion (TDC) is provided for each time-correlated photon count (ZPZ3),
wherein the time-to-digital conversion (TDC) has a counter (ec) for the at least one second photon count (ZPZ2),
wherein the first and the at least one second time-correlated photon count (ZPZ2) are determined on separate evaluation paths in the evaluation circuit, and
wherein the counter (ec) is connected in a second evaluation path to a component for phase shifting, which delays a reference clock, with which the counter (ec) is supplied, depending on the start signal received from a transmitter circuit,
**characterized in that** the evaluation circuit performs the at least one second time-correlated photon count (ZPZ2) with a lower temporal resolution than the first time-correlated photon count (ZPZ1).

## Revendications

1. Dispositif de réception pour la réception de signaux lumineux avec :
- un récepteur de lumière (D) qui convertit les signaux lumineux en signaux électriques,
- un circuit d'évaluation qui, à partir des signaux électriques, détermine une distance entre le dispositif de réception et au moins un objet (OB) au moyen d'un comptage de photons corrélé dans le temps (ZPZ3), qui associe les signaux électriques à des temps, et d'un signal de départ pour une émission des signaux lumineux, le comptage de photons corrélé dans le temps (ZPZ3) étant effectué au moins deux fois,
où
pour chaque comptage de photons corrélé dans le temps (ZPZ3), il est prévu une conversion temps-numérique (TDC) respective,
la conversion temps-numérique (TDC) présentant un compteur (ec) pour l'au moins un deuxième comptage de photons (ZPZ2),
le premier et l'au moins un deuxième comptage de photons corrélé dans le temps (ZPZ2) étant déterminés sur des chemins d'évaluation séparés dans le circuit d'évaluation, et
le compteur (ec) étant relié dans un deuxième chemin d'évaluation à un composant de déphasage qui retarde une horloge de référence alimentant le compteur (ec) en fonction du signal de départ reçu d'un circuit d'émission, **caractérisé en ce que**
le circuit d'évaluation exécute l'au moins un deuxième comptage de photons corrélé dans le temps (ZPZ2) avec une résolution temporelle plus faible que le premier comptage de photons corrélé dans le temps (ZPZ1).

2. Dispositif de réception selon la revendication 1, **caractérisé en ce que** le premier comptage de photons corrélé dans le temps (ZPZ1) présente une résolution quatre fois, huit fois ou seize fois plus élevée que l'au moins un deuxième comptage de photons corrélé dans le temps (ZPZ2).

3. Dispositif de réception selon l'une des revendications précédentes, **caractérisé en ce qu'**il est prévu une unité de plausibilisation qui délivre un signal de plausibilisation à l'aide de données du premier et de l'au moins un deuxième comptage de photons corrélé dans le temps (ZPZ2).

4. Dispositif de réception selon la revendication 3, **caractérisé en ce que** les données sont un nombre de comptages dans un intervalle de temps déterminé ou une détection d'objet.

5. Procédé de réception de signaux lumineux comprenant les étapes suivantes :
- conversion des signaux lumineux reçus en signaux électriques
- détermination d'une distance entre un dispositif de réception et un objet (OB) au moyen d'un comptage de photons corrélé dans le temps (ZPZ3), qui associe les signaux électriques à des temps, et d'un signal de départ pour une émission des signaux lumineux, le comptage de photons corrélé dans le temps (ZPZ3) étant effectué au moins deux fois,
une conversion temps-numérique (TDC) respective étant prévue pour chaque comptage de photons corrélé dans le temps (ZPZ3),
la conversion temps-numérique (TDC) présentant un compteur (ec) pour l'au moins un deuxième comptage de photons (ZPZ2),
le premier et l'au moins un deuxième comptage de photons corrélé dans le temps (ZPZ2) étant déterminés sur des chemins d'évaluation séparés dans le circuit d'évaluation, et
le compteur (ec) étant relié dans un deuxième chemin d'évaluation à un composant de déphasage qui retarde une horloge de référence alimentant le compteur (ec) en fonction du signal de départ reçu d'un circuit d'émission, **caractérisé en ce que**
le circuit d'évaluation exécute l'au moins un deuxième comptage de photons corrélé dans le temps (ZPZ2) avec une résolution temporelle plus faible que le premier comptage de photons corrélé dans le temps (ZPZ1).
